**Europäisches Patentamt**

**European Patent Office**

**Office européen des brevets**

(19)

(11) Veröffentlichungsnummer: **0 037 077**
**A2**

(12) # EUROPÄISCHE PATENTANMELDUNG

(21) Anmeldenummer: **81102252.4**

(22) Anmeldetag: **25.03.81**

(51) Int. Cl.³: **H 04 N 7/04**

(30) Priorität: **31.03.80 DE 3012429**

(43) Veröffentlichungstag der Anmeldung:
**07.10.81 Patentblatt 81/40**

(84) Benannte Vertragsstaaten:
**AT BE CH FR GB IT LI LU NL SE**

(71) Anmelder: **SIEMENS AKTIENGESELLSCHAFT Berlin und München**
**Postfach 22 02 61**
**D-8000 München 22(DE)**

(72) Erfinder: **Armbrüster, Heinrich, Dr. Dr.-Ing.**
**Voglmaierstrasse 8**
**D-8000 München 70(DE)**

(72) Erfinder: **Thöner, Gerhard, Dipl.-Ing.**
**Ringstrasse 158**
**D-8024 Deisenhofen(DE)**

(72) Erfinder: **Wille, Hermann, Ing. grad.**
**Karwendelstrasse 6b**
**D-8135 Söcking(DE)**

(54) **Verfahren zur Verringerung der Wartezeiten bei Informationssystemen.**

(57) Die Erfindung betrifft ein Verfahren zur Verringerung der Wartezeiten bei der Anzeige von Text- und Graphikseiten, die bei einem Informationssystem von einem Sender über einen Datenkanal zu mindestens einem Empfänger übertragen werden, bei dem außer der dargestellten Seite auch benachbarte Seiten gespeichert werden.

Senderseitig wird zu den darzustellenden Zeichen Zusatzinformation (ZU) mit Hinweisen auf inhaltlich zugeordnete Seiten hinzugefügt.

Auf der Teilnehmerseite werden außer der dargestellten Seite durch eine Erkennungsschaltung (ER) und eine Ablaufsteuerung (AL) die relevanten Seiten von einer Auswahlschaltung (AU) selektiert und in einen Seitenspeicher (SP) eingeschrieben.

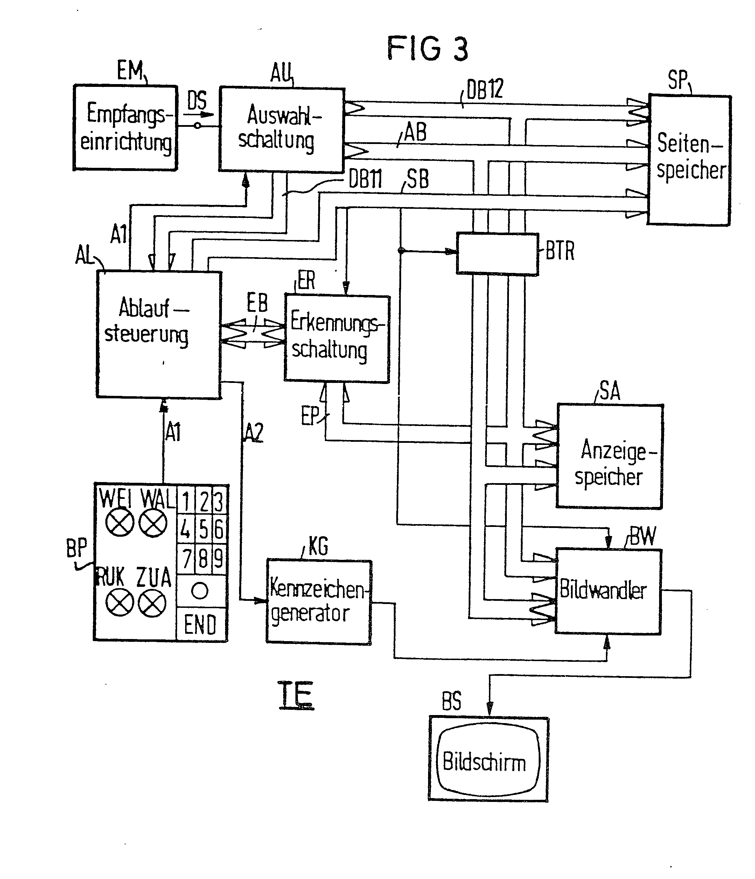

Über ein Bedienpult (BP) kann mit dem Seitenspeicher ein "Dialog durchgeführt werden. Wartezeiten bei der Auswahl einer neuen Seite entfallen weitgehend. Der "Dialog" ist so gestaltet, daß neben der Wahl der nächsten Seite und der zuletzt angezeigten Seite auch Verzweigungen und Sprünge sowie Rücksprünge zu vorher dargestellten Seiten möglich sind (Fig. 3).

./...

EP 0 037 077 A2

FIG 3

SIEMENS AKTIENGESELLSCHAFT        Unser Zeichen
Berlin und München                VPA· 80 P 6 5 6 8 E

Verfahren zur Verringerung der Wartezeiten bei Informationssystemen

Die Erfindung betrifft ein Verfahren zur Verringerung
der Wartezeiten bei der Anzeige von Text- und Graphikseiten, die bei einem Informationssystem von einem Sender über einen Datenkanal zu mindestens einem Empfänger übertragen werden, bei dem außer der dargestellten Seite auch benachbarte Seiten gespeichert werden.

Im Anlageband 4 zum Telekommunikationsbericht, Herausgeber: Bundesministerium für das Post- und Fernmeldewesen, Vertrieb: Verlag Dr. Hans Heger Goethestr. 56,
Bad Godesberg 1 ist das Telekommunikationssystem
Teletext (Videotext) beschrieben. Bei diesem Verfahren
werden in den nicht zur Fernsehbildübertragung genutzten Zeilen des  Fernsehsignales Text- oder Graphikseiten übertragen. Hierbei handelt es sich um einen
reinen Informationsverteilerdienst.Der Benutzer entnimmt die für ihn interessante Information aus einem
zyklisch umlaufenden Angebot an Text- und Graphikseiten. Die mittlere Wartezeit bis zum Auffinden der
gewünschten "Seite" beträgt beispielsweise ca.
12 Sekunden.

In dem Buch "Elektronische Textkommunikation", Herausgeber: Professor W. Kaiser, Springerverlag 1978, ist
in dem Aufsatz "Kabeltext" (Seiten 69 bis 84) ein Kabeltextverfahren beschrieben. Es wurde erkannt, wie
hinderlich die Wartezeit bei einem Seitenwechsel ist,
dies um so mehr, da die einzelnen "Seiten" vom Informationsinhalt her klein ist.

P 1 Mai / 31.3.80

Unter einer Seite wird hier die Informationsmenge verstanden, die in einem einmaligen Zugriff auf dem Bildschirm eines Sichtgerätes darstellbar ist. Das Seitenformat der oben genannten Telekommunikationssysteme entspricht der Darstellung von 24 Zeilen mit je 40 Zeichenplätzen.

Zum schnellen "Überfliegen" von Texten wird von Prof. Kaiser vorgeschlagen, jeweils mehrere angrenzende Seiten in einen Speicher des Empfangsgerätes einzuschreiben. Aus diesem Speicher kann der Text praktisch verzögerungsfrei abgerufen werden, so daß er auf dem Bildschirm durch eine entsprechende Steuervorrichtung zeilenweise nach oben bzw. unten verschoben oder durchblättert werden kann.

Das von Prof. Kaiser vorgeschlagene Verfahren bietet Vorteile beim Lesen eines fortlaufenden Artikels. Es erleichtert aber nicht das Aufsuchen einer bestimmten Information nach dem Verfahren eines Suchbaumes und bietet auch keine Möglichkeit zu verzweigen oder rasch zu einer entfernten inhaltlich zugehörigen Informationsseite zu springen. Gerade Suchvorgänge mit Hilfe von Inhaltsverzeichnissen oder Suchbäumen werden aber durch die Vielzahl der dabei nötigen Abrufvorgänge und die Summierung der Wartezeiten erheblich behindert.

Es ist die Aufgabe der Erfindung, ein Verfahren anzugeben, das ein rasches Darstellen der gewünschten Seite bei hohem Bedienungskomfort und vertretbarem technischen Aufwand ermöglicht.

Die Aufgabe wird erfindungsgemäß dadurch gelöst, daß beim Sender zu wenigstens einem Teil der zu übertragenden Text- oder Graphikseiten Zusatzinformation mit Hinweisen auf weitere inhaltlich zugeordnete Seiten hinzugefügt wird und beim Empfänger jeweils eine Seite auf einem Sichtgerät dargestellt wird und die in der Zusatzinformation dieser Seite bezeichneten weiteren Seiten gespeichert werden.

Als Sichtgerät kann sowohl ein herkömmlicher Fernsehbildschirm, ein Datensichtgerät oder ein druckendes Anzeigegerät, verwendet werden.

Die mit der Erfindung erzielten Vorteile bestehen darin, daß der Teilnehmer die gewünschte Information rasch auffindet, da die zur angezeigten Seite inhaltlich zugehörigen Seiten sowie die im Dialog zuletzt dargestellten Seiten im Speicher des Empfangsgerätes gespeichert sind. Mit dem Speicher kann ein schneller Dialog abgewickelt werden, da inhaltlich zugeordnete Seiten ohne Wartezeiten abgerufen werden können. Ebenso ist es zumeist möglich, mehrere Schritte des vorausgegangenen Dialogverlaufes zurückzuverfolgen.

Es ist weiterhin vorteilhaft, als Zusatzinformation für das Einlesen der inhaltlich zugehörigen Seiten in den Speicher die absoluten oder relativen Seitennummern der zu speichernden Seiten zu verwenden.

Diese Information kann mit jeder Seite oder auch nur bei Bedarf übertragen werden.

Die relativen Seitennummern beziehen sich dabei auf die Seitennummer der dargestellten Seite.

Die Zusatzinformation ist - für den Teilnehmer unsichtbar - in den übertragenen Seiten enthalten. Da die einzelnen übertragenen Seiten ohnehin bereits mit einer Numerierung versehen sind, ist die Angabe dieser Seitennummer ein einfacher Weg, um die gewünschte Seite
empfangsseitig für die Einspeicherung zu selektieren.
Fehlt die Zusatzinformation zur Einspeicherung und
sind die nachfolgenden Speicherplätze im Empfangsspeicher noch unbelegt, so können weitere folgende Seiten
eingespeichert werden.

Es ist zweckmäßig, das Vorhandensein inhaltlich zugeordneter Information beispielsweise durch das Einblenden von Symbolen bzw. Klartexten auf dem Sichtgerät
oder optisch auf dem Bedienpult anzuzeigen. Sind mehrere untereinander gleichrangige inhaltlich zugeordnete
Seiten abgespeichert, so werden Hinweise auf diese
Seiten unter Angabe von indirekten Verzweigungsadressen, wie z.B. 1, 2, 3 ... usw. und evtl. einer Angabe
des Titels auf dem Bildschirm dargestellt. Diese Darstellung ist bereits Bestandteil der ohnehin übertragenen Seite.

Vorteilhafte Ausgestaltungen der Erfindung sind in den
Unteransprüchen angegeben.

Ein Ausführungsbeispiel der Erfindung wird im folgenden
anhand der Figuren 1 bis 4 näher beschrieben.

Es zeigen
Fig. 1 eine Dialogstruktur zum raschen Auffinden der
gewünschten Seite,
Fig. 2 das Übertragungsformat einer auf dem Bildschirm
dargestellten Seite sowie der zugehörigen Zusatzinformation,
Fig. 3 eine Teilnehmereinrichtung auf der Teilnehmerseite und
Fig. 4 den jeweiligen Inhalt des Seitenspeichers beim
Teilnehmer.

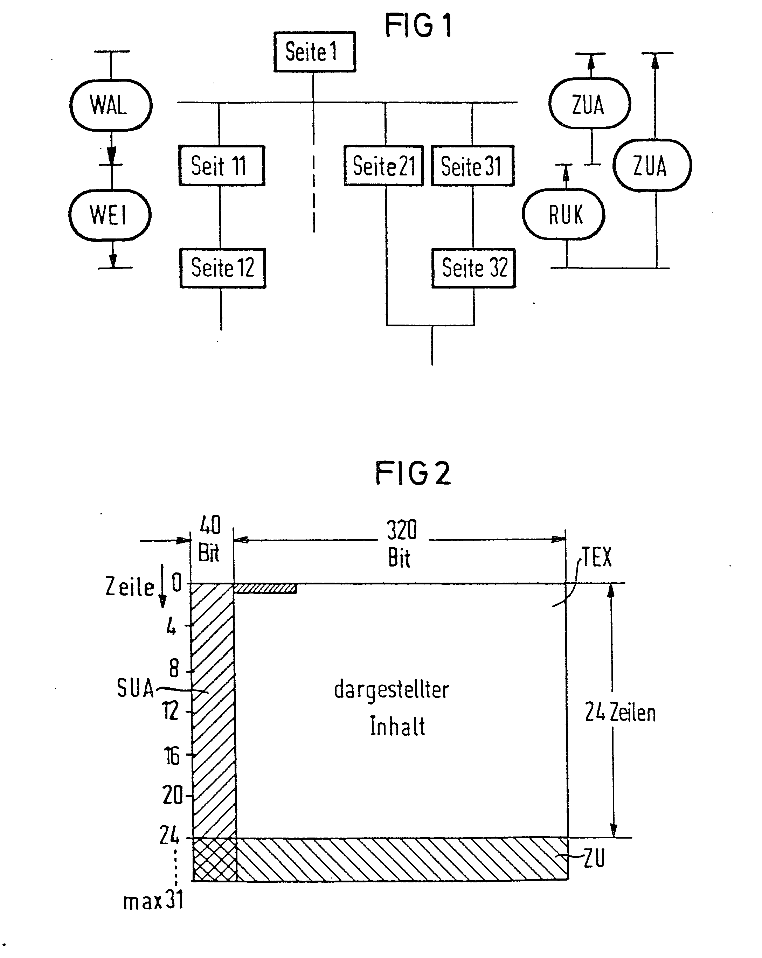

In Fig. 1 ist eine Dialogstruktur zum raschen Auffinden der gewünschten Seite anhand einer an sich bekannten Suchbaumstruktur dargestellt. Die Anzeige der gewünschten Seite erfolgt über den Abruf mit den Befehlen WAL, WEI, RUK und ZUA, die beispielsweise über gleichnamige Bedientasten gegeben werden. Von einer Seite 1 aus besteht die Möglichkeit zu drei Seiten, den Seiten 11, 21, 31 zu verzweigen. Dies geschieht mit Hilfe des Befehles "WAL" (Wahl). Mit "WAL 1" wird die Seite 11 aufgerufen,"WAL 2" führt zur Seite 21, "WAL 3" nach 31. Von der Seite 11 aus kann die sich anschließende Seite 12 mit einem Befehl "WEI" (Weiter) erreicht werden.

Von der Seite 12 aus kann durch einen Befehl RUK (Zurück) die Seite 11 erneut dargestellt werden.

Von allen Seiten wird über einen Befehl "ZUA" (Zurück zur Absprungseite) wieder die Seite 1 erreicht. Die Möglichkeiten sind in Fig. 1 durch Pfeile dargestellt.

Beispielhaft ist in Fig. 2 das Übertragungsformat einer Videotextseite zu sehen. Jede Seite enthält 24 Zeilen, die mit 0 bis 23 bezeichnet sind; jede Zeile beinhaltet 360 Bits. Die ersten 40 Bits jeder Zeile bilden den Synchronisierungs- und Adressenteil (SUA). Die folgenden 320 Bit, das entspricht 40 darstellbaren Zeichen, stehen für Nutzinformation (TEX) zur Verfügung. Die Zeile "0" enthält zusätzliche Kennzeichen, so daß in dieser Zeile nur 32 Zeichenpositionen zur Darstellung von Text- bzw. Graphikinformation zur Verfügung stehen. Die dargestellte Information kann explizit Hinweise auf zugehörige Seiten enthalten (z.B. Querverweise oder Verzweigungen).

Die Zusatzinformation ZU wird in diesem Ausführungsbeispiel in einer oder mehreren der nachfolgenden Zeilen 24 bis 31 übertragen und bleibt für den Benutzer unsichtbar, da keine der Zeilen 24 bis 31 auf dem Sichtgerät dargestellt wird.

Beim Informationsanbieter wird die Text-, Graphik- oder gegebenenfalls Bildinformation an einem Bild- schirm-Editierplatz erstellt. Die zu übertragende Information wird dabei am Editierplatz in die gewünschte Darstellungsform gebracht. Es gehört zur redaktionellen Bearbeitung, die zur Benutzerführung erforderlichen sichtbaren Hinweise einzufügen sowie die mit diesen Hinweisen korrespondierende Zusatzinformation in eine der beim Teilnehmer (Benutzer) unsichtbar bleibenden Zeilen einzusetzen. Dazu müssen diese Zeilen auf dem Bildschirm des Editierplatzes darstellbar sein. Die erforderlichen Ergänzungen, z.B. mit Synchronisierbits, sowie der Zeichencode sind vom jeweiligen Informationssystem abhängig und für das hier beschriebene Verfahren ohne Bedeutung. Fig. 3 zeigt die bei einem Teilnehmer für das Verfahren notwendige Teilnehmereinrichtung TE.

Der Ausgang einer Empfangsschaltung EM ist mit dem Eingang einer Auswahlschaltung AU verbunden, deren Ausgang über einen Datenbus DB12 und einen Adressenbus AB mit einem Seitenspeicher SP verbunden ist. Ferner besteht ein Datenbus DB11 zwischen der Auswahlschaltung AU und dem Eingangsport einer Ablaufsteuerung AL. Über eine Bustrennstufe BTR sind ein Anzeigespeicher SA, ein Bildwandler BW und der Eingangsport einer Erkennungsschaltung ER an den Datenbus DB12 sowie der Anzeigespeicher SA und der Bildwandler BW an den Adressenbus AB angeschlossen. Die Erkennungsschaltung ER ist durch den Datenbus EB mit der Ablaufsteuerung AL verbunden und wirkt über deren Ausgang A1 auf die Auswahlschaltung AU ein. Die Bustrennstufe BTR wird über eine Steuerleitung des Steuerbusses SB der Ablaufsteuerung AL geschaltet.

Das Bedienpult BP greift über einen Eingang E1 in die Ablaufsteuerung AL ein. Es enthält alle notwendigen Tasten, unter anderem die Ziffern-Tasten 0 ... 9, die zur direkten Anwahl einer bestimmten Seite notwendig sind, ferner vier Funktionstasten zum schnellen Auffinden von inhaltlich zugeordneten Seiten. Diese Tasten sind mit "WEI, RUK, WAL, ZUA" bezeichnet und können als Leuchtdrucktasten ausgebildet sein. Über eine "Ende"-Taste "END" wird das Empfangsgerät abgeschaltet. Der Anschluß des Bedienpultes an die Ablaufsteuerung kann drahtgebunden aber auch drahtlos erfolgen.

An einen Ausgang A2 der Ablaufsteuerung AL ist ein Kennzeichengenerator KG angeschaltet, dessen Ausgang in den Bildwandler BW eingreift. Der Kennzeichengenerator erzeugt Symbole auf einem Bildschirm BS, die beispielsweise bedeuten, daß inhaltlich zugeordnete Seiten vorhanden und abgespeichert sind.

An den Bildwandler BW ist als Sichtgerät der Bildschirm BS angeschlossen, auf dem die gewünschte Seite dargestellt wird.

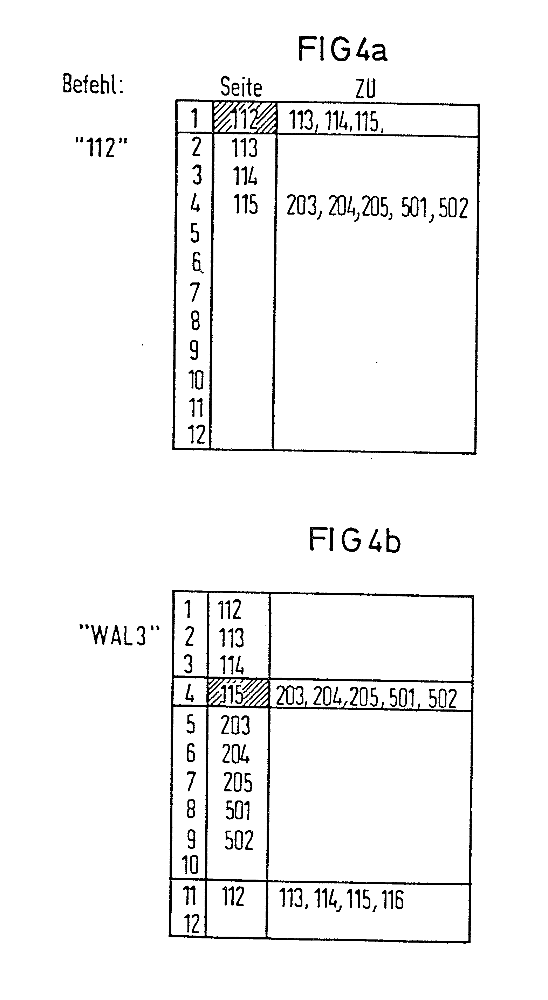

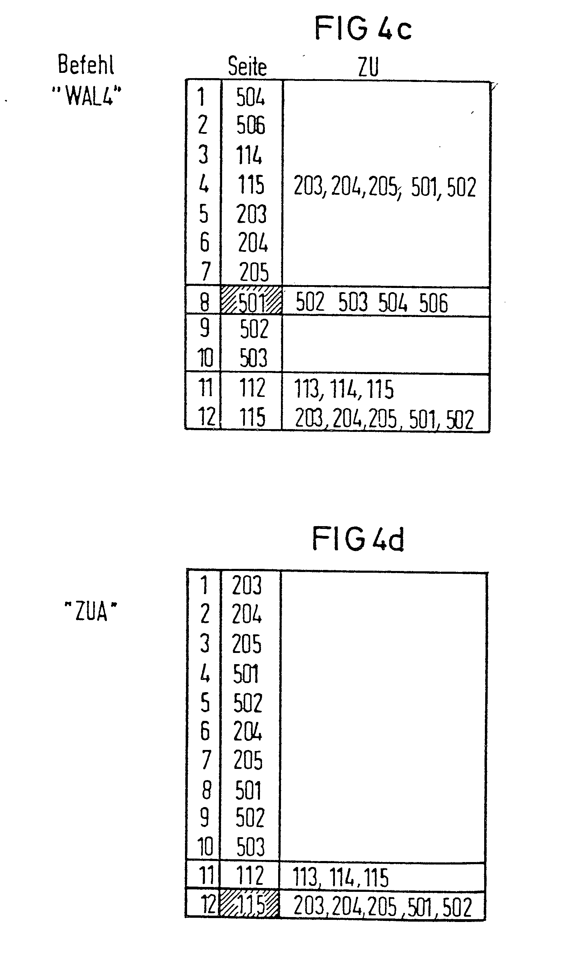

Die Funktion des Verfahrens wird anhand der Figuren 3 und 4 näher erläutert.

Von der Empfangsschaltung EM wird ein digitales Signal DS abgegeben, das am Eingang der Auswahlschaltung AU anliegt. Über das Bedienpult BP wird die Seitennummer der gewünschten Seite in die Ablaufsteuerung AL eingegeben. Die Ablaufsteuerung AL steuert die Auswahlschaltung AU. Erscheint nun in dem zyklisch wiederkehrenden digitalen Signal DS am Ausgang der Empfangsschaltung EM die gewünschte Seite, so wird diese über den Datenbus DB11 von der Ablaufsteuerung AL erkannt.

Über den Steuerbus SB wird der nächste freie Platz im Seitenspeicher SP angewählt.

Die Information wird verzögert von der Auswahlschaltung AU über den Datenbus DB12 zum Seitenspeicher SP und zum Anzeigespeicher SA durchgeschaltet. Die Verzögerungszeit entspricht der Länge einer Seitenadresse.

Die Zeilenkennung der einzuspeichernden Seite wird in der Auswahlschaltung AU abgetrennt und zur Steuerung des Seitenspeichers SP über den Adreßbus AB genutzt. Die Wortadressen werden von der Auswahlschaltung AU automatisch weitergeschaltet. Die Information wird damit im gleichen Format, wie in Fig. 2 dargestellt, in den Speicher SP eingeschrieben. Dasselbe gilt auch für den Anzeigespeicher AZ.

Die erste ausgewählte Seite, in Fig. 4 mit 112 bezeichnet, wird in den Speicherbereich 1 des Seitenspeichers SP und gleichzeitig in den Anzeigespeicher SA eingeschrieben. Dieser Vorgang ist beendet, sobald die Kopfzeile der Folgeseite in dem digitalen Signal DS erkannt wird. Über die Bustrennstufe BTR werden Daten- und Adressenbus jetzt aufgetrennt.

Solange der Anzeigespeicher SA zur Darstellung des Inhaltes auf dem Bildschirm zyklisch ausgelesen wird, liegt der Informationsinhalt - damit auch der Inhalt der Zusatzinformation ZU - am Eingangsport der Erkennungsschaltung ER an. Die Auswahlschaltung AU wird über die Ablaufsteuerung AL veranlaßt, die jeweils zugehörigen Seiten zum Seitenspeicher SP durchzuschalten. Über den Steuerbus SB erfolgt dabei wieder die Zuweisung eines Speicherbereiches im Seitenspeicher SP für die gerade einlaufende Seite.

In der Zusatzinformation der Seite 112 (Fig. 4) sind die Seitennummern 113, 114, 115, 116 angegeben; die entsprechenden Seiten werden in die folgenden Speicherbereiche 2 bis 5 eingeschrieben. Sobald die Speicheranweisungen der Zusatzinformation abgearbeitet sind, kann die Ablaufsteuerung AL über den Kennzeichengenerator KG die Einblendung eines entsprechenden Symbols in den Bildschirm (und/oder das Aufleuchten einer entsprechenden Lampe oder Leuchttaste im Bedienpult BP) veranlassen.

Drückt der Teilnehmer jetzt die "Weiter"-Taste WEI, so löst dies die Aufhebung der Bustrennung und die Übernahme der inzwischen in den Speicherbereich 2 des Seitenspeichers SP eingeschriebenen Information in den Anzeigespeicher SA aus. Damit erfolgt auch die Darstellung dieser neuen Seite 113 auf dem Bildschirm BS. Ferner liegt jetzt die Zusatzinformation dieser Seite an der Erkennungsschaltung ER an. Es wird deutlich, daß über die Zusatzinformation der jeweils dargestellten Seite das Laden des Seitenspeichers SP beliebig gesteuert werden kann.

In der hier beispielhaft dargestellten Hardware-Lösung einer Teilnehmereinrichtung erfolgt das Füllen von anschließenden Speicherbereichen im Seitenspeicher SP vorteilhaft immer bezogen auf die jeweils dargestellte Seite. Dadurch bleibt die Information bereits "gelesener" Seiten solange wie möglich im Speicher erhalten
und kann über die "Zurück"-Taste RUK noch einmal abgerufen werden.

Anhand von Fig. 4 soll an einem Dialogablauf das Laden
und Lesen des Seitenspeichers sowie der Ablauf der Bedienung der Teilnehmereinrichtung weiter verdeutlicht
werden. Fig. 4 zeigt den Speicherinhalt des Seitenspeichers SP. Vom Seitenspeicher SP sind aus Gründen
einer einfachen Darstellung nur 12 Speicherbereiche
gezeigt, die mit den Ziffern 1 bis 12 gekennzeichnet
sind. Für den gesamten Inhalt einer Seite ist im jeweiligen Speicherbereich repräsentativ die Seitennummer
angegeben (linke Spalte). In der rechten Spalte ZU
(Zusatzinformation) stehen die Seitennummern der zugeordneten Seiten. Ist nur die nächste Seite zugeordnet, wurde auf die Angabe der Zusatzinformation verzichtet.

Die jeweils auf dem Bildschirm BS dargestellte Seite
ist in Fig. 4 schraffiert.

Im dargestellten Beispiel wird, wie bereits beschrieben, die Seite 112 als erste auf dem Bildschirm BS
dargestellt. Diese Seite wird, wie auch die dazugehörige Zusatzinformation "ZU", in der schon beschriebenen Weise im Seitenspeicher SP im Speicherbereich 1
eingespeichert. Während der Teilnehmer diese auf dem
Bildschirm dargestellte Seite liest, werden die in
der Zusatzinformation aufgeführten zugehörigen Seiten
113, 114, 115, 116 in der angegebenen Reihenfolge in
unmittelbar nachfolgende Speicherbereiche des Seitenspeichers eingeschrieben (Fig. 4a). Erkennt der Teilnehmer aufgrund der dargestellten Information der Seite 112, die beispielsweise einen Suchbaum enthält,
daß die für ihn relevante Folgeseite die Seite 115
ist, drückt er die "Auswahl"-Taste WAL und gibt zusätzlich die Ziffer 3 ein, die ihm im dargestellten
Text angegeben ist. Dies hat zur Folge (Fig. 4b):

a) Der Speicherbereich 4 (Speicherbereich 1 + relative
Seitennummer 3) des Seitenspeichers und damit die dort
gespeicherte Seite 115 wird auf dem Bildschirm dargestellt.

b) Die in der Zusatzinformation dieser Seite 115 angegebenen Folgeseiten - im Beispiel 203, 204, 205, 501,
502 - werden in die Speicherbereiche 5, 6, 7, 8 und 9
eingeschrieben.

c) Die Absprungseite 112 wird in einen gesonderten
Speicherbereich (im Beispiel Nr. 11) eingeschrieben.
Die letztgenannte Maßnahme ist erforderlich, um bei
Sprüngen oder Verzweigungen leicht zur Absprungseite
zurückzufinden. Durch Drücken der "Zurück-zur Absprungseite"-Taste ZUA kann die Absprungseite auch nach
zwischengeschaltetem beliebigem Dialogverlauf wiedergefunden werden, wenn sie in dem besonderen Speicherbereich steht.

Ist der Teilnehmer mit der Seite 115 zu dem von ihm
gesuchten fortlaufenden Artikel gekommen, so drückt
er, um zur nächsten Seite zu gelangen, die "Weiter"-
Taste WEI.

Ein Hinweis auf ergänzende Information erscheint auch
im Text. Das Auffinden der angegebenen ergänzenden
Information - im Beispiel die Seite 501 - ist für den
Teilnehmer durch erneute Betätigung der "Auswahl"-Taste WAL und einer zusätzlichen, ebenfalls im Text genannten Ziffer möglich. Dabei wird die Absprungseite in den nächsten gesonderten Speicherbereich 12 eingeschrieben. Sind mehr Absprungseiten zu Speichern als Speicherplätze im gesonderten Speicherbereich vorhanden, werden die ältesten eingespeicherten Seiten überschrieben.

Die Darstellung der Seite 501 (Fig. 4c) führt im Seitenspeicher zur Übernahme weiterer Seiten gemäß der Zusatzinformation ZU (502, 503, 504, 506) dieser Seite in die Speicherbereiche 9, 10, 1 und 2. Dabei werden in den Speicherbereichen 1 und 2 alte Informationen überschrieben.

Durch Auswahl der Seite 501 ist der Teilnehmer somit in eine neue Informationskette mit den Seiten 501 bis 506 gelangt, in der er die folgenden Seiten aufrufen kann. Er kann aber auch zur Absprungseite der ursprünglichen Kette zurückkehren, indem er die "Zurück zur Absprungseite"-Taste -ZUA - drückt (Fig. 4d). Mit der erneuten Darstellung der Seite 115 baut sich die zur Seite zugehörige Information in den Speicherbereichen 1, 2, 3, 4 und 5 wieder auf.

Erneutes Drücken der "Zurück zur Absprungseite"-Taste ZUA führt zur vorletzten Absprungseite, hier zur Seite 112. Entsprechend der Anzahl der für Absprungseiten vorgesehenen Speicherplätze können auch mehr Verzweigungen zurückverfolgt werden. Die Speicherplätze im gesonderten Speicherbereich werden beim Auslesen in der umgekehrten Reihenfolge wie beim Einlesen aufgerufen.

Durch Betätigung der "Zurück"-Taste RUK wird der im Speicher vorherstehende Speicherbereich angezeigt.
Wird in Fig. 5b die "Zurück"-Taste RUK betätigt, so
wird zunächst die Seite 114 und bei nochmaliger Betätigung die Seite 113 erneut dargestellt. Die Betätigung
der "Zurück"-Taste RUK ist nur in linearen Strukturen
sinnvoll.

Das vorgeschlagene Verfahren zur schnellen und komfortablen Informationsbeschaffung bei Kabeltext, Videotext oder vergleichbaren Informationssystemen wurde
hier anhand einer reinen Hardware-Lösung des Teilnehmergerätes beschrieben. Bei etwas höherem Aufwand ist
das Verfahren ebenso für eine Software-Lösung geeignet,
die dann neben allgemein höherer Flexibilität und Geschwindigkeit auch weitere Bedienungsvorteile bringt:
Zurückverfolgen des Dialogs und gegebenenfalls
detaillierte Fehlerweise.

14 Patentansprüche

4 Figuren

Patentansprüche

1. Verfahren zur Verringerung der Wartezeiten bei der Anzeige von Text- und Graphikseiten, die bei einem Informationssystem von einem Sender über einen Datenkanal zu mindestens einem Empfänger übertragen werden, bei dem außer der dargestellten Seite auch benachbarte Seiten gespeichert werden, d a d u r c h   g e - k e n n z e i c h n e t , daß beim Sender zu wenigstens einem Teil der zu übertragenden Text- oder Graphikseiten Zusatzinformation mit Hinweisen auf weitere inhaltlich zugeordnete Seiten hinzugefügt wird und daß beim Empfänger jeweils eine Seite auf einem Sichtgerät (BS) dargestellt wird und die in der Zusatzinformation (ZU) dieser Seite bezeichneten weiteren Seiten gespeichert werden.

2. Verfahren nach Anspruch 1, d a d u r c h   g e - k e n n z e i c h n e t , daß als Zusatzinformation Seitennummern von inhaltlich zugeordneten Seiten übertragen werden.

3. Verfahren nach Anspruch 1, d a d u r c h   g e - k e n n z e i c h n e t , daß als Zusatzinformation relative Seitennummern der inhaltlich zugeordneten Seiten übertragen werden.

4. Verfahren nach einem der vorhergehenden Ansprüche, d a d u r c h   g e k e n n z e i c h n e t , daß die Zusatzinformation (ZU) in nicht dargestellten Zeilen und/oder in einem nicht dargestellten Bereich der Zeilen (SUA) einer Seite übertragen wird.

5. Verfahren nach einem der vorhergehenden Ansprüche, d a d u r c h   g e k e n n z e i c h n e t , daß

das Vorhandensein inhaltlich zugeordneter Seiten beim Empfänger angezeigt wird.

6. Verfahren nach Anspruch 5, d a d u r c h   g e - k e n n z e i c h n e t , daß die Anzeige inhaltlich zugeordneter Seiten durch Einblendung von Marken und/oder Text auf dem Bildschirm erfolgt.

7. Verfahren nach Anspruch 6, d a d u r c h   g e - k e n n z e i c h n e t , daß die Anzeige inhaltlich zugeordneter Seiten durch eine Vorrichtung beim Empfänger, beispielsweise optisch auf dem Bedienpult (BP), erfolgt.

8. Verfahren nach Anspruch 6, 7 oder 8, d a d u r c h   g e k e n n z e i c h n e t , daß bei einem Vorhandensein mehrerer gleichrangiger inhaltlich zugeordneter Seiten dies auf dem Sichtgerät (BS) durch Angabe des Titels oder einer Inhaltsangabe der zugeordneten Seiten und durch Angabe einer indirekten Verzweigungsadresse für die zugeordneten Seiten, beispielsweise 1, 2, 3, dargestellt wird.

9. Verfahren nach einem der vorhergehenden Ansprüche, d a d u r c h   g e k e n n z e i c h n e t , daß die inhaltlich zugeordneten Seiten aus einem Seitenspeicher (SP) abgerufen und auf dem Sichtgerät (BS) dargestellt werden können.

10. Verfahren nach einem der vorhergehenden Ansprüche, d a d u r c h   g e k e n n z e i c h n e t , daß die Speicheradressen der zuletzt dargestellten Seiten gespeichert werden und daß die zuletzt dargestellten Seiten wahlweise in zeitlich umgekehrter Reihenfolge der ersten Darstellung erneut dargestellt werden können.

11. Verfahren nach einem der vorhergehenden Ansprüche, d a d u r c h  g e k e n n z e i c h n e t , daß mindestens die zuletzt dargestellte Seite gespeichert wird, von der aus zu einer von mehreren zugeordneten Seiten verzweigt wurde, und daß diese Seite wahlweise erneut darstellbar ist.

12. Empfangsseitige Anordnung zur Durchführung des Verfahrens nach Anspruch 1, d a d u r c h  g e - k e n n z e i c h n e t , daß an den Ausgang einer Empfangseinrichtung (EM) eine von einer Ablaufsteuerung (AL) gesteuerte Auswerteschaltung (AU) angeschlossen ist, daß diese Auswerteschaltung (AU) über einen ersten Datenbus (DB11) mit der Ablaufsteuerung (AL) verbunden ist und über einen verzögerten zweiten Datenbus (DB12) mit einem Seitenspeicher (SP) sowie über eine Bustrennstufe (BTR) mit einem Eingangsport eines einem Anzeigespeicher (SA), dem Eingangsport eines Bildwandlers (BW) sowie dem Eingangsport (EP) einer Erkennungsschaltung (ER) verbunden ist, daß ein über die Auswahlschaltung (AU) gesteuerter Adressenbus (AB) mit dem Seitenspeicher (SP) verbunden ist und über die Bustrennstufe (BTR) mit dem Adresseneingangsport des Anzeigespeichers (AZ) und dem Ein/Ausgabeport des Bildwandlers (BW) verbunden ist, daß ein Sichtgerät (BS) an den Bildwandler angeschlossen ist, daß über einen Steuerbus (BS) der Ablaufsteuerung (AL) die Adressierung der Speicherbereiche des Seitenspeichers (SP) sowie die Steuerung der Bustrennstufe (BTR), des Bildwandlers (BW) und der Erkennungsschaltung (ER) erfolgt, daß die Ablaufsteuerung (AL) über einen Datenbus (EB) mit der Erkennungsschaltung (ER) verbunden ist und daß ein Bedienpult (BP) an die Ablaufsteuerung (AL) angeschlossen ist, von dem aus die Auswahl der auf dem Sichtgerät (BS) darzustellenden Seite erfolgt.

13. Anordnung nach Anspruch 15, d a d u r c h    g e - k e n n z e i c h n e t , daß ein an die Ablaufsteuerung (AL) angeschlossener Kennzeichengenerator (KG) vorgesehen ist, über den Symbole und/oder Textzeichen über einen an seinen Ausgang angeschlossenen Bildwandler (BW) auf dem Bildschirm (BS) darstellbar sind.

14. Anordnung nach Anspruch 15 oder 16, d a d u r c h g e k e n n z e i c h n e t , daß beim Bedienpult (BP) eine erste Funktionstaste (VOR) für die Wahl der nächsten Seite im Seitenspeicher (SP), daß eine zweite Funktionstaste (RUK) für die Wahl der im Seitenspeicher (SP) zur angezeigten Seite vorherstehenden Seite, daß eine dritte Funktionstaste (WAL) für die Wahl einer von mehreren zugeordneten Seiten, daß eine vierte Funktionstaste (ZUA) für die Wahl der letzten vor einer Verzweigung - also vor Betätigung der dritten Funktionstaste (WAL) - dargestellten Seite vorgesehen ist und daß Zifferntasten (ZT) zur Eingabe einer Adresse in die Ablaufsteuerung sowie eine weitere Bedientaste (END) für die Beendigung einer Übertragung vorgesehen sind.

1/4

FIG 1

FIG 2

# FIG 3

## FIG 4a

Befehl:

"112"

| | Seite | ZU |
|---|---|---|
| 1 | 112 | 113, 114, 115, |
| 2 | 113 | |
| 3 | 114 | |
| 4 | 115 | 203, 204, 205, 501, 502 |
| 5 | | |
| 6 | | |
| 7 | | |
| 8 | | |
| 9 | | |
| 10 | | |
| 11 | | |
| 12 | | |

## FIG 4b

"WAL 3"

| | | |
|---|---|---|
| 1 | 112 | |
| 2 | 113 | |
| 3 | 114 | |
| 4 | 115 | 203, 204, 205, 501, 502 |
| 5 | 203 | |
| 6 | 204 | |
| 7 | 205 | |
| 8 | 501 | |
| 9 | 502 | |
| 10 | | |
| 11 | 112 | 113, 114, 115, 116 |
| 12 | | |

## FIG 4c

Befehl
"WAL4"

| | Seite | ZU |
|---|---|---|
| 1 | 504 | |
| 2 | 506 | |
| 3 | 114 | |
| 4 | 115 | 203, 204, 205, 501, 502 |
| 5 | 203 | |
| 6 | 204 | |
| 7 | 205 | |
| 8 | 501 | 502  503  504  506 |
| 9 | 502 | |
| 10 | 503 | |
| 11 | 112 | 113, 114, 115 |
| 12 | 115 | 203, 204, 205, 501, 502 |

## FIG 4d

"ZUA"

| | | |
|---|---|---|
| 1 | 203 | |
| 2 | 204 | |
| 3 | 205 | |
| 4 | 501 | |
| 5 | 502 | |
| 6 | 204 | |
| 7 | 205 | |
| 8 | 501 | |
| 9 | 502 | |
| 10 | 503 | |
| 11 | 112 | 113, 114, 115 |
| 12 | 115 | 203, 204, 205, 501, 502 |